# EUROPÄISCHE PATENTSCHRIFT

(11) **EP 1 839 795 B1**
(45) Veröffentlichungstag und Bekanntmachung des Hinweises auf die Patenterteilung: **08.04.2009**
(21) Anmeldenummer: 07003379.0
(22) Anmeldetag: 17.02.2007
(51) Int. Cl.: B23K 1/00, B23K 1/005, B23K 26/22, B23K 26/24, B23K 33/00, B60J 5/04, F16B 5/08

(54) **Kraftfahrzeug-Anbauteil mit einer Fügeverbindung, die im unteren Bereich eine unterbrochene geneigte Schmelzfügenaht aufweist**
Motor vehicle mounted part with a joint connection, which comprises in the lower part an intermittent inclined joining seam
Pièce rapportée de véhicule automobile comprenant un assemblage comprenant dans sa partie inférieur un joint interrompu incliné

(30) Priorität: 30.03.2006 DE 102006014707
(43) Veröffentlichungstag der Anmeldung: 03.10.2007
(73) Patentinhaber: Bayerische Motoren Werke Aktiengesellschaft, 80809 München (DE)
(72) Erfinder: Hornig, Hans, 83536 Gars (DE); Schindlbeck, Martin, 84088 Neufahrn (DE)

(56) Entgegenhaltungen:
- EP-A1- 0 628 375
- WO-A-20/04091843
- DE-A1- 19 605 341
- JP-A- 2 020 676
- US-A1- 2002 073 625

## Beschreibung

Die Erfindung bezieht sich auf ein Kraftfahrzeug-Anbauteil und insbesondere für eine Kraftfahrzeugtür, bestehend aus mindestens einem Außen- und mindestens einem Innenblech, die getrennt voneinander vorgefertigt und randseitig miteinander verschweißt oder verlötet sind, nach dem Oberbegriff des Patentanspruchs 1 (siehe, z.B. JP 02-20676).

Es ist bekannt, die Außen- und Innenbleche von Kfz-Anbauteilen randseitig durch einen Bördelfalz zu verbinden und zur Vermeidung von Korrosionserscheinungen in Längsrichtung des Bördelfalzes verteilt Ablaufschlitze im Innenblech auszubilden und/oder den Bördelfalz durch eine Klebstoff-/Dichtmasse gegen ein Eindringen von Feuchtigkeit zu versiegeln. Dabei kommt es jedoch aufgrund der kapillarartigen Fügespaltwirkung im Bereich der Bördelnaht in Verbindung mit prozessbedingten Undichtigkeiten der Bördelfalzversiegelung zu höchst korrosionskritischen Feuchtigkeitsansammlungen, so dass eine längerfristige Gewährleistung gegen ein Durchrosten nicht eingehalten werden kann.

Demgegenüber wird bei den z. B. aus der DE 103 17 552 B3 bekannten Fügeverbindungen der eingangs genannten Art auf eine solch korrosionsanfällige Bördelnaht verzichtet und stattdessen werden das äußere und das innere Blechteil randseitig miteinander verlötet oder verschweißt. Auch dabei lassen sich jedoch feuchtigkeitsbedingte Korrosionserscheinungen an den Blechteilen im Bereich der Löt- bzw. Schweißnähte nicht ausreichend sicher vermeiden.

Aus der JP 02-20676 ist eine Verbindung eines Türaußeribleches mit einem Türinnenblech bekannt, bei dem das Türaußenblech um das Türinnenblech gebördelt ist. In den Eckbereichen ist das umgebördelte Türaußenblech ausgeschnitten. Um an dieser Stelle Korrosion und die Verwendung von Dichtmaterial zu vermeiden, wird in dieser Patentanmeldung vorgeschlagen, diesen Bereich mit einem Lot auszufüllen. Im Übrigen wird das Türinnenblech mit dem Türaußenblech mittels Laserlötung miteinander verbunden.

Aus der EP 0 628 375 A1 ist es bekannt, ein Türinnenblech mit einem Türaußenblech mit Hilfe einer Laserschweißung zu verbinden. Hierzu wird ebenfalls das Türaußenblech um das Türinnenblech gebördelt. Um Verzug auf dem Außenblech zu vermeiden, wird vorgeschlagen, keine geschlossene Schweißnaht zu erzeugen, sondern diese entweder punktförmig oder strichlinienförmig auszubilden. Bei Anwendung einer strichlinienförmigen Lasernaht wird zur Vermeidung von Verzug diese von Aussparungen im Türaußenblech im Bereich benachbart zur Lasemaht umgeben.

Aufgabe der Erfindung ist es, ein Kraftfahrzeug-Anbauteil der eingangs genannten Art so auszubilden, dass eine deutlich verbesserte Korrosionsbeständigkeit der Kraftfahrzeug-Anbauteile erzielt wird.

Diese.Aufgabe wird erfindungsgemäß durch eine Fügeverbindung mit den Merkmalen des Patentanspruchs 1 gelöst.

Erfindungsgenäß wird durch die Schmelzfügeverbindung der Blechteile in Zusammenwirken mit der Unterteilung der Verbindungsnaht in einzelne, jeweils zu einer nach außen führenden Ablauföffnung geneigte Teilstücke gewährleistet, dass die Blechteile im Bereich der Fügeverbindung von feuchtigkeitsspeichernden Sammeltaschen oder -spalten freigehalten und Flüssigkeitspartikel an den geneigten Nahtabschnitten aktiv nach außen befördert werden, so dass die Anbauteile hochgradig sicher und dauerhaft gegen ein Durchrosten geschützt werden.

Um zu verhindern, dass sich die Schmelzfügenaht auf der Sichtseite des Außenblechs abzeichnet, wird der Wärmeeintrag beim Fügeprozess vorzugsweise dadurch möglichst niedrig gehalten, dass die Blechteile lasergelötet werden und die Lötnaht als Weichlotnaht ausgebildet wird.

Zweckmäßigerweise ist das Innenblech randseitig quer zur Flächenerstreckung des Außenblechs abgebogen und über eine Kehlnaht mit dem Außenblech verbunden, wodurch sich die Blechteile beim Fügeprozess auf einfache Weise gegenseitig mit einer aus Gründen einer qualitativ hochwertigen Fügenaht erwünscht geringen Spaltbreite positionieren lassen. Wahlweise wird das Außenblech in besonders bevorzugter Ausgestaltung der Erfindung randseitig zurückgebogen und am zurückgebogenen Randabschnitt im Abstand zur Biegekante mit dem Innenblech verbunden, so dass einerseits im Randbereich des Außenblechs ein Versteifungseffekt erreicht und andererseits störende Bearbeitungsspuren beim Schmelzfügen der Blechteile dadurch vermieden werden, dass die Fügenaht entfernt vom Sichtbereich des Außenblechs ausgebildet wird.

Die Erfindung wird nunmehr anhand eines Ausführungsbeispiels in Verbindung mit den Zeichnungen näher erläutert. Es zeigen in stark schematisierter Darstellung:
- **Fig. 1**: eine erfindungsgemäß gestaltete Fügeverbindung für ein Anbauteil in Form einer Kraftfahrzeug-Rohbautür;
- **Fig. 2**: einen Schnitt längs der Linie II-II der Fig. 1; und
- **Fig. 3**: eine der Fig. 2 entsprechende Darstellung einer modifizierten Schmelzfügeverbindung.

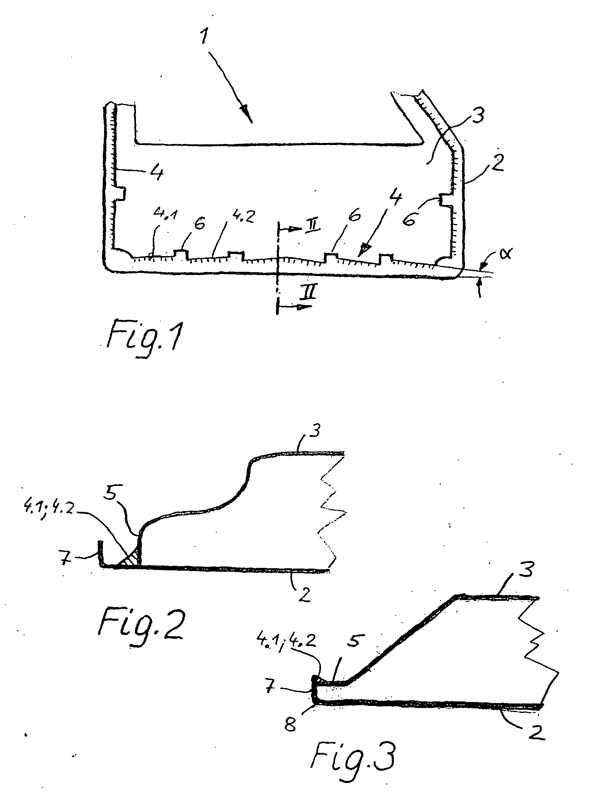

Die in den Fign. gezeigte Rohbautür 1 besteht aus einem äußeren und einem inneren Blechteil 2, 3, die randseitig durch eine Schweiß- oder Löt- und insbesondere eine Weichlötnaht 4, welche mittels eines Laser- oder Plasmastrahls hergestellt wird, miteinander verbunden sind. Die Lötnaht 4 ist durch taschenförmige, im Randbereich 5 des inneren Blechteils 3 vorgestanzte Ablauföffnungen 6 unterbrochen, und wie aus Fig. 1 ersichtlich, sind die zwischen den Ablauföffnungen 6 angeordneten Lötnahtabschnitte 4.1, 4.2 ......4.n zumindest am unteren Rand der Rohbautür 1 unter einem Winkel α von z. B. 14° in Richtung der jeweils angrenzenden Ablauföffnung 6 geneigt ausgebildet.

Bei der Ausführungsform gemäß Fig. 2 ist der taschenförmig ausgestanzte Randbereich 5 des Innenblechs 3 quer zur Flächenerstreckung des Außenblechs 2 abgebogen und auf dieses T-stoßmäßig aufgesetzt und im Eckbereich über die als Kehlnaht ausgebildeten Lötnahtabschnitte 4.1, 4.2..... mit dem Außenblech 2 verbunden. Zum Schutz vor Verletzungen und aus Versteifungsgründen ist das Außenblech 2 im Abstand zur Lötnaht 4 ebenfalls mit einem abgebogenen Randstreifen 7 versehen.

Bei dem Ausführungsbeispiel nach Fig. 3, wo die der ersten Ausführungsform entsprechenden Komponenten durch das gleiche Bezugszeichen gekennzeichnet sind, verläuft der taschenförmig ausgestanzte Randbereich 5 des Innenblechs 3 im Wesentlichen parallel zum Außenblech 2 und erstreckt sich bis zu dessen zurückgebogenem Randstreifen 7, mit dem er im Abstand zur Biegekante 8 des Randstreifens 7 wiederum über nach Art einer Kehlnaht ausgebildete Lötnahtabschnitte 4.1, 4.2 .... verbunden ist. Im Übrigen ist die Bau- und Funktionsweise der Fügeverbindung nach Fig. 3 die gleiche wie die der ersten Ausführungsform.

## Patentansprüche

1. Kraftfahrzeug-Anbauteil (1), insbesondere Kraftfahrzeugtür, mit einem unteren Randbereich, wobei das Anbauteil (1) aus mindestens einem Innen- (3) und mindestens einem Außenblech (2), die getrennt voneinander vorgefertigt und randseitig durch eine Fügeverbindung mit einer durch Schweißen oder Löten erzeugten Schmelzfügenaht (4) miteinander verbunden sind,
**dadurch gekennzeichnet; dass** die Schmelzfügenaht (4) durch Ablauföffnungen (6) unterbrochen ist und zumindest einzelne Schmelzfügenahtabschnitte (4.1, 4.2 ....) im unteren Randbereich des Anbauteils (1) in Richtung der jeweils angrenzenden Ablauföffnung (6) geneigt ausgebildet sind.

2. Kraftfahrzeug-Anbauteil (1) nach Anspruch 1,
**dadurch gekennzeichnet, dass** die Innen- und Außenbleche (2, 3) lasergelötet sind.

3. Kraftfahrzeug-Anbauteil (1) nach Anspruch 1,
**dadurch gekennzeichnet, dass** die Innen- und Außenbleche (2, 3) weichgelötet sind

4. Kraftfahrzeug-Anbauteil (1) nach einem der vorhergehenden Ansprüche,
**dadurch gekennzeichnet, dass** das Innenblech (3) randseitig quer zur Flächenerstreckung des Außenblechs (2) abgebogen und über eine Kehlnaht (4) mit dem Außenblech (2) verlötet ist.

5. Kraftfahrzeug-Anbauteil (1) nach einem der Ansprüche 1 bis 3,
**dadurch gekennzeichnet, dass** das Außenblech (2) randseitig zurückgebogen und am zurückgebogenen Randabschnitt (7) im Abstand zur Biegekante (8) mit dem Innenblech (3) verbunden ist

## Claims

1. A motor-vehicle attachment part (1), especially motor-vehicle door, with a lower edge region, wherein the attachment part (1) comprises at least one inner (3) and at least one outer panel (2), which are prefabricated separately from one another and are connected to one another at the edge by means of a joint connection by a melt joint seam (4) produced by welding or soldering,
**characterised in that** the melt joint seam (4) is interrupted by discharge openings (6) and at least individual melt joint seam portions (4.1, 4.2 ...) are formed in the lower edge region of the attachment part (1) inclined in the direction of the respective adjacent discharge opening (6).

2. A motor-vehicle attachment part (1) according to claim 1,
**characterised in that** the inner and outer panels (2, 3) are laser-soldered.

3. A motor-vehicle attachment part (1) according to claim 1,
**characterised in that** the inner and outer panels (2, 3) are soft-soldered.

4. A motor-vehicle attachment part (1) according to any one of the preceding claims, **characterised in that** the inner panel (3) is bent off transversely to the planar extent of the outer panel (2) at the edge and is soldered to the outer panel (2) by means of a hollow seam (4).

5. A motor-vehicle attachment part (1) according to any one claims 1 to 3,
**characterised in that** the outer panel (2) is bent back at the edge and is connected to the inner panel (3) at the bent-back edge portion (7) at a spacing from the bent edge (8).

## Revendications

1. Pièce rapportée (1) pour véhicule automobile notamment portière de véhicule automobile comportant une zone de bord inférieur,
la pièce rapportée (1) étant constituée par au moins une tôle intérieure (3) et au moins une tôle extérieure (2), préfabriquées séparément l'une de l'autre et reliées du côté du bord par une liaison d'assemblage à l'aide d'un cordon d'assemblage par fusion (4) réalisé par soudage ou brasage,
**caractérisée en ce que**
le cordon d'assemblage par fusion (4) est interrompu par des orifices de sortie (6) et au moins certains segments d'assemblage par fusion (4.1, 4.2 ...) de la zone du bord inférieur de la pièce rapportée (1) sont inclinés en direction de l'orifice de sortie (6) respectivement adjacent.

2. Pièce rapportée (1) pour véhicule automobile selon la revendication 1,
**caractérisée en ce que**
la tôle intérieure et la tôle extérieure (3, 2) sont brasées par laser.

3. Pièce rapportée (1) pour véhicule automobile selon la revendication 1,
**caractérisée en ce que**
la tôle intérieure et la tôle extérieures (3, 2) sont réunies par un brasage tendre.

4. Pièce rapportée (1) pour véhicule automobile selon les revendications précédentes,
**caractérisée en ce que**
la tôle intérieure (3) est recourbée du côté du bord transversalement à l'extension de la surface de la tôle extérieure (2) et elle est soudée à la tôle extérieure (2) par une soudure en gorge (4).

5. Pièce rapportée (1) pour véhicule automobile selon les revendications 1 à 3,
**caractérisée en ce que**
la tôle extérieure (2) est repliée du côté du bord et son segment de bord (7), replié, est relié à la tôle intérieure (3) à une certaine distance de l'arête de pliage (8).
